# DEMANDE DE BREVET EUROPEEN

(11) **EP 0 729 220 A1**
(43) Date de publication de la demande: **28.08.1996**
(21) Numéro de dépôt: 96400383.4
(22) Date de dépôt: 23.02.1996
(51) Int. Cl.: H02M 7/48

(54) **Procédé de commande pour courant électrique bidirectionnel et onduleur de tension à commutation douce**

(30) Priorité: 27.02.1995 FR 9502250
(71) Demandeur: ALCATEL ALSTHOM COMPAGNIE GENERALE D'ELECTRICITE, F-75008 Paris (FR)
(72) Inventeur: Gonzalez, Juan, 78730 St. Arnould en Yvelines (FR); Forest, François, c/o CNRS/Lesir, 94235 Cachan Cedex (FR)
(74) Mandataire: Fournier, Michel

(57) **Abrégé**

Des cycles de commutation successifs sont réalisés en mode zéro de tension pour appliquer chacun une impulsion de tension (W9) à chacune de plusieurs bornes (M"1, M"2) d'une charge inductive (S''). Une commande du début ou de la fin de cette impulsion, selon le sens du courant fourni à cette borne, permet de commander la puissance fournie à cette charge.

## Description

La présente invention concerne une commande de tension propre à agir sur un courant électrique bidirectionnel circulant dans une charge inductive, cette commande étant effectuée à l'aide d'organes statiques à partir d'une source fournissant une tension électrique unidirectionnelle permanente. Dans la présente description un procédé réalisant une telle commande est appelé procédé de commande pour courant électrique. Le dispositif qui le met en oeuvre est classiquement appelé onduleur.

Un tel onduleur inclue des interrupteurs qui sont typiquement à semiconducteurs et qui permettent d'appliquer une tension discontinue à la charge. Ces interrupteurs sont commandés selon une séquence prédéterminée qui se répète au cours de cycles de commutation successifs. En raison de l'inductance de la charge le courant qui la traverse dépend d'une valeur moyenne de cette tension, cette valeur moyenne pouvant être définie sur un nombre entier de cycles.

Il est souhaitable que le réglage de cette valeur moyenne puisse être effectué sur un nombre de cycles aussi petit que possible. Il est bien connu pour cela d'utiliser un mode de commande dit de "modulation de largeur d'impulsion" qui permet d'effectuer ce réglage sur chaque cycle.

Cette invention concerne plus spécifiquement le cas où les cycles sont réalisés dans un mode de commutation dit "zéro de tension" appartenant à une catégorie appelée "commutation douce". Les modes de cette catégorie limitent les pertes d'énergie qui se produisent à chaque opération de commutation. Ils permettent ainsi, notamment, d'augmenter la fréquence de commutation.

Dans le mode zéro de tension, l'amorçage d'un interrupteur, c'est-à-dire son passage à l'état conducteur, s'effectue exclusivement quand la tension à ses bornes est nulle. De plus un condensateur dit "d'aide à la commutation" est connecté aux bornes de cet interrupteur et limite les variations de tension et donc les pertes qui se produisent à son blocage.

Un onduleur à commutation en mode zéro tension pour courant bidirectionnel est connu par le document US-A-4 864 483 (inventeur Divan). Il sera appelé ci-après "onduleur Divan". Il réalise le mode de commutation zéro de tension grâce à une interface qui est connectée entre la source permanente et un pont de conversion alimentant la charge. Il ne permet malheureusement ni de réaliser une modulation de largeur d'impulsion ni même seulement d'abaisser autant qu'il conviendrait le nombre de cycles de commutation sur lequel est définie la valeur moyenne réglée de la tension.

La présente invention a notamment pour but, de permettre d'abaisser ce nombre davantage que précédemment.

Dans ce but elle a notamment pour objet un procédé de commande pour courant électrique, ce procédé comportant la réalisation d'une succession de cycles de commutation en mode zéro de tension, chacun de ces cycles appliquant une impulsion de tension à chacune de plusieurs bornes d'une charge inductive, ce procédé étant caractérisé par le fait que le sens du courant passant par cette borne est détecté, une modulation de la largeur de cette impulsion de tension étant réalisée par réglage dans le temps de l'extrémité finale ou de l'extrémité initiale de cette impulsion selon le sens de courant ainsi détecté.

Selon la présente invention il est en effet apparu qu'il était possible de concilier dans le cas d'un onduleur les avantages de la commutation en mode zéro de tension avec ceux de la modulation de largeur d'impulsions. Ces deux types d'avantages peuvent plus particulièrement être conciliés par un procédé tel que défini à la revendication 2 annexée.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente un hacheur comportant des organes typiques d'onduleurs selon cette invention tout en étant plus simple que ces derniers. Elle représente aussi des grandeurs électriques apparaissant aussi bien dans ce hacheur que dans ces onduleurs.

Les figures 2 et 3 représentent respectivement un onduleur monophasé et un onduleur triphasé selon cette invention.

Les figures 4 et 5 représentent des diagrammes de variations de diverses tensions et intensités apparaissant au cours d'un cycle de commutation respectivement dans les onduleurs des figures 2 et 3.

Les figures 6 à 12 représentent par des traits épaissis les courants parcourant le hâcheur de la figure 1 à des phases successives P1 à P7 d'un cycle de commutation qui commande un courant de charge de sens direct.

Les figures 13 à 21 représentent par des traits épaissis les courants parcourant un hacheur comportant une partie des organes de l'onduleur connu Divan, à des phases successives P'1 à P'9 d'un cycle de commutation qui commande un courant de charge de sens direct.

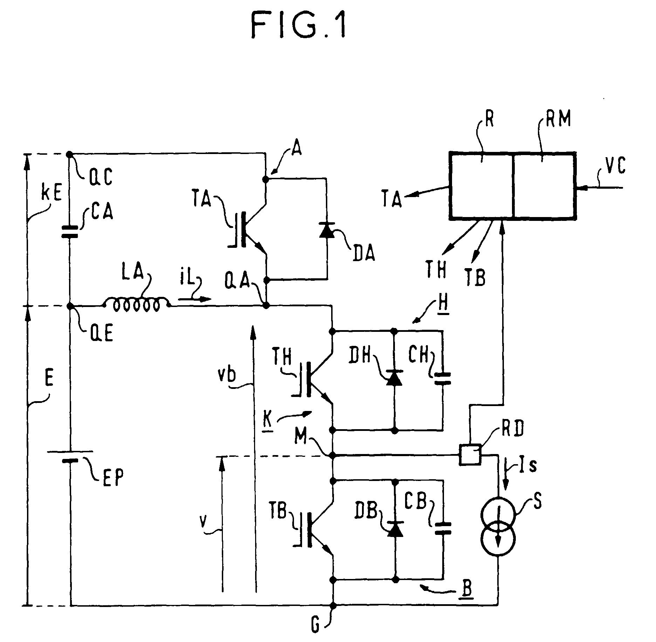

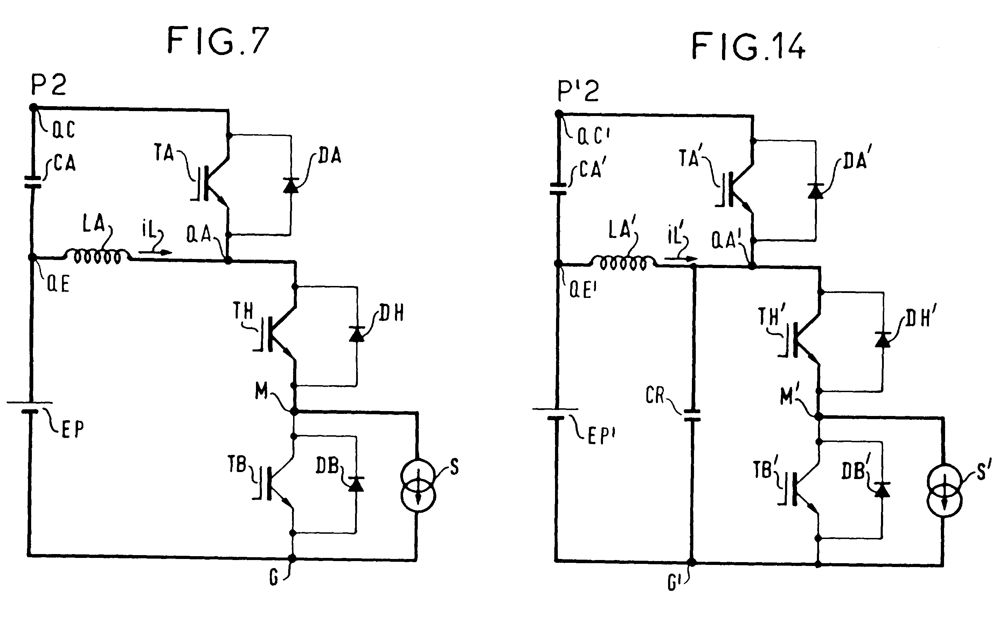

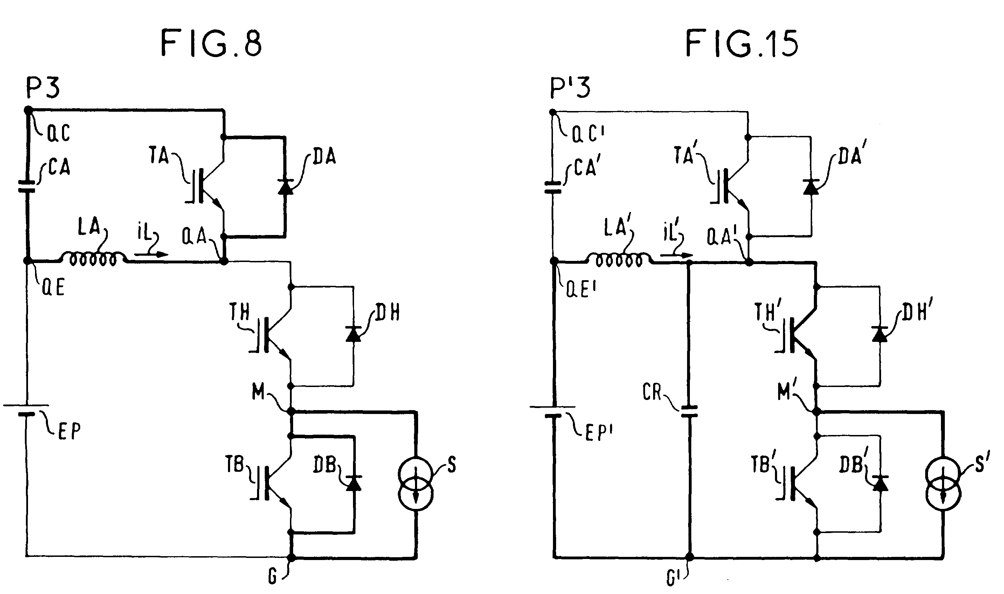

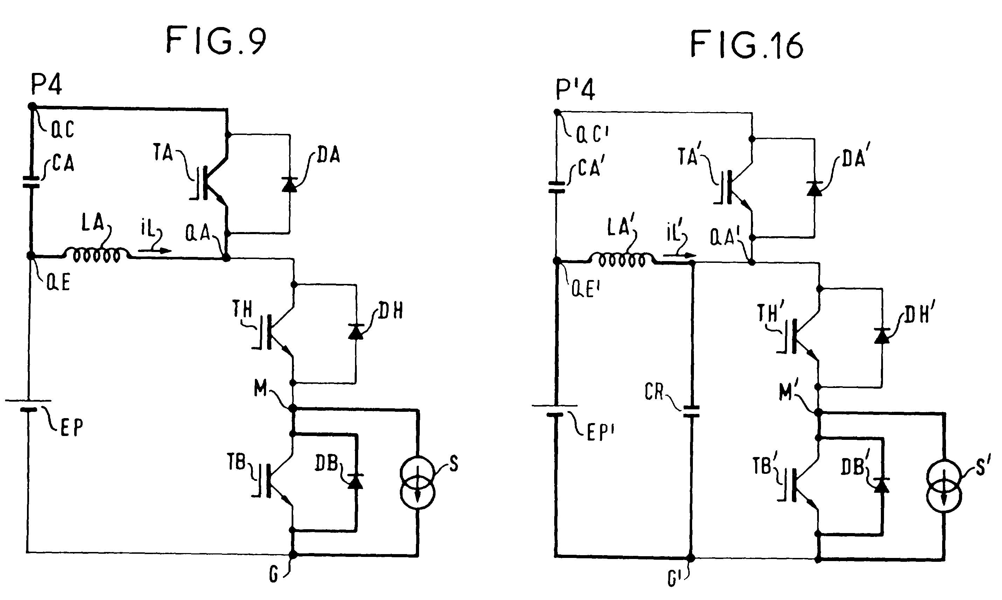

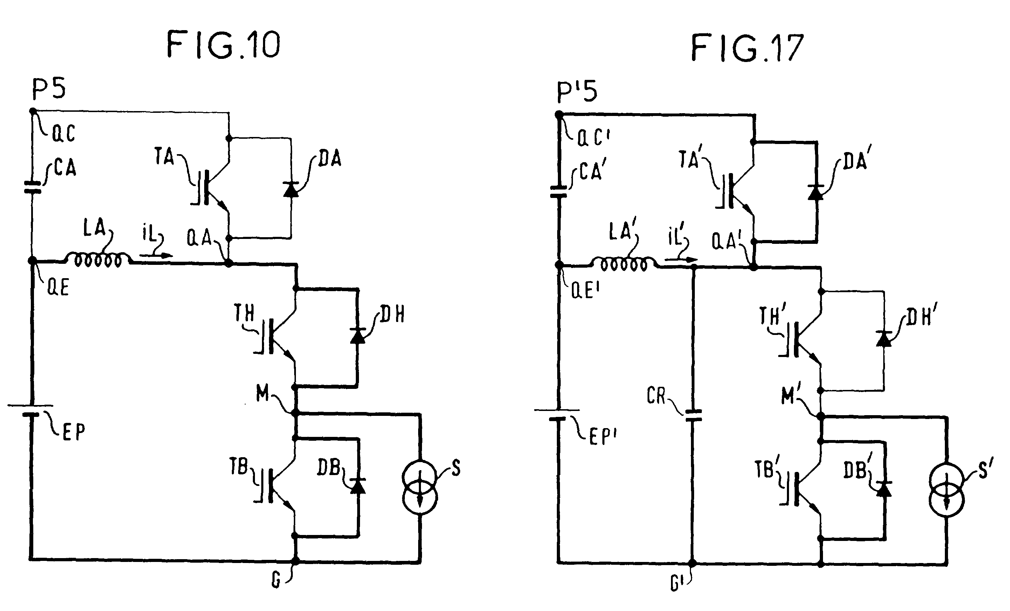

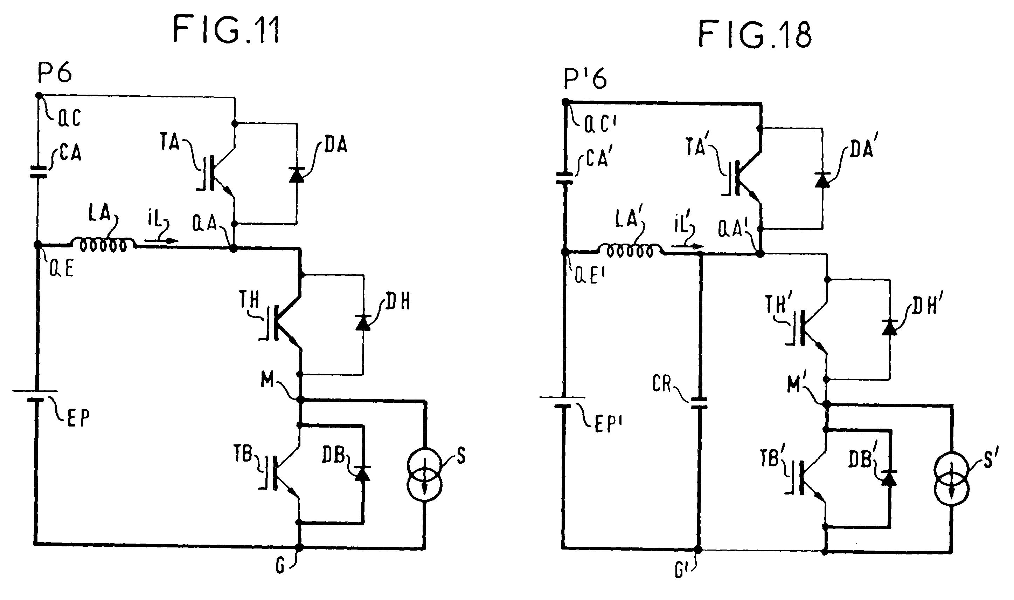

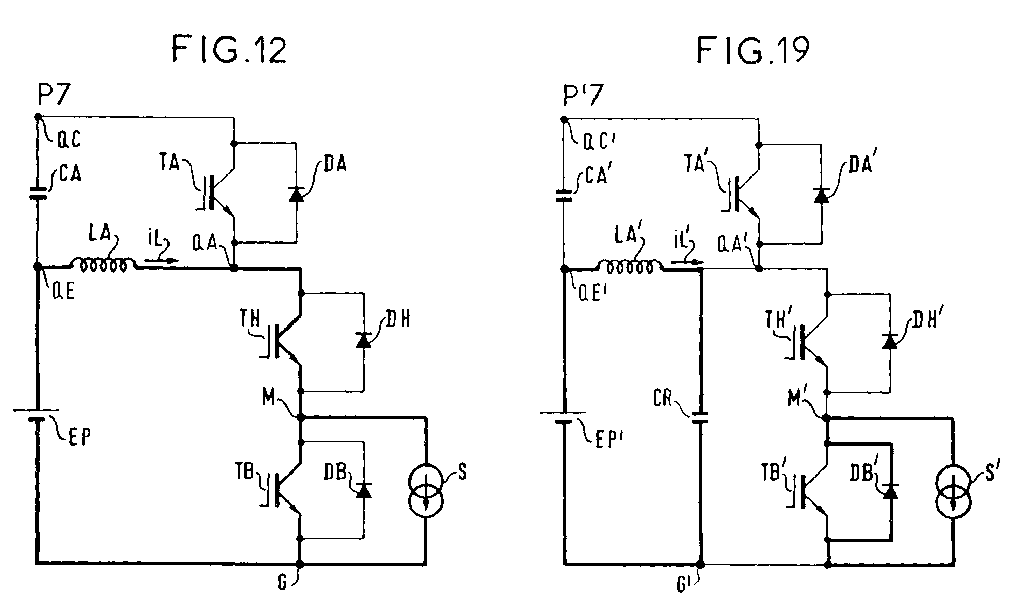

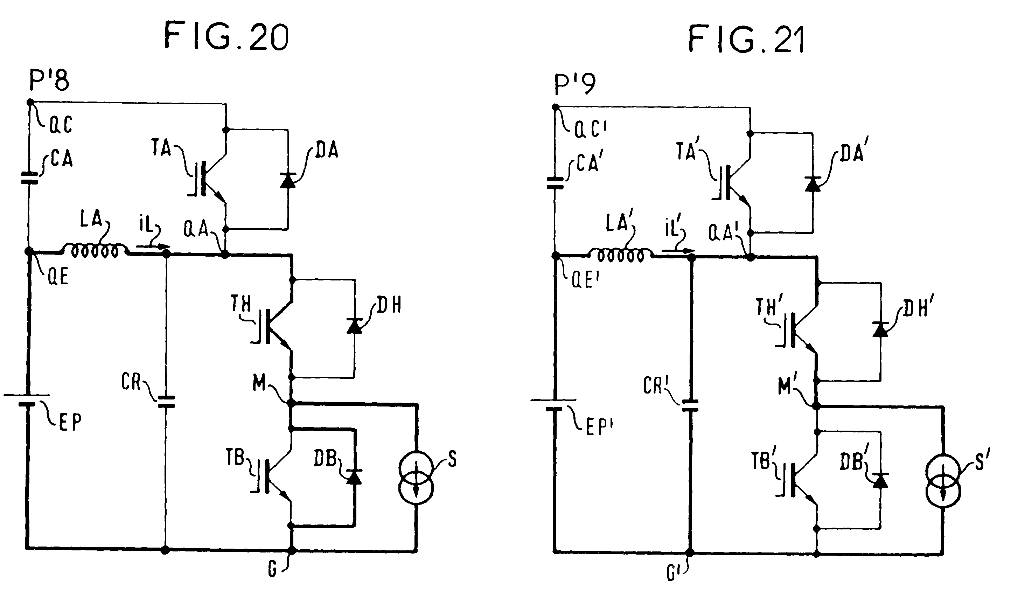

Les hacheurs de la figure 1 et des figures 6 à 21 sont constitués chacun par l'association d'une interface et d'un pont de conversion à un seul bras. Ce bras unique K est relié à une des deux bornes d'une charge S, l'autre borne étant reliée à la masse G. Il permet seulement d'injecter et commander un courant unidirectionnel alors que la présente invention vise la commande de courants bidirectionnels à l'aide d'un pont de conversion comportant au moins deux bras. La description des courants parcourant ces hacheurs facilitera la compréhension du fonctionnement des onduleurs selon cette invention et leur comparaison avec l'onduleur Divan.

Les éléments des onduleurs monophasé et triphasé selon cette invention, de même que beaucoup de ceux de l'onduleur connu Divan, correspondent à des éléments du hâcheur de la figure 1 en ce sens qu'ils sont connectés les uns aux autres de la même manière. Ils sont désignés à l'aide des mêmes lettres de référence, deux, trois ou une apostrophes, respectivement, étant ajoutées à ces lettres. En outre les chiffres 1, 2 ou 3 ont été ajoutés aux lettres de référence des bras des ponts de conversion selon qu'il s'agissait d'un premier, d'un deuxième ou d'un troisième bras, respectivement.

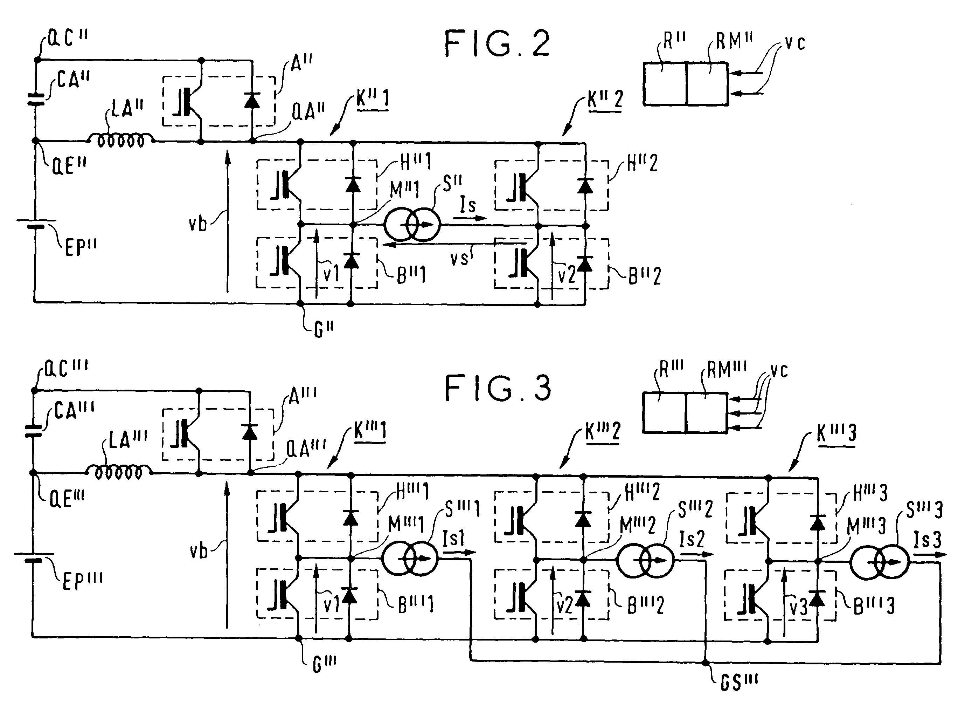

La nature de la charge à alimenter conditionne le choix entre les deux onduleurs donnés comme exemples de la présente invention, où entre d'autres onduleurs éventuels selon cette invention. Cette charge peut être monophasée comme la charge S" représentée à la figure 2 qui est alimentée entre deux bornes ; le pont de conversion comporte alors deux bras K"1 et K"2, et l'onduleur est monophasé.

La charge est plus typiquement une charge triphasée comme illustré à la figure 3. Elle a alors trois bornes connectées respectivement à trois enroulements S‴1, S‴2 et S"'3 connectés par ailleurs à un point commun GS"'. Le pont de conversion comporte alors de manière classique trois bras K‴1, K‴2 et K‴3 alimentant respectivement ces trois bornes, et l'onduleur est triphasé.

En se référant plus particulièrement à la figure 2 et accessoirement aux figures 1, 3, 4 et 5, on va maintenant décrire de manière plus détaillée les organes d'un onduleur selon cette invention étant entendu que, sauf indication contraire, des organes analogues peuvent être vus sur les figures 1, 2 et 3.

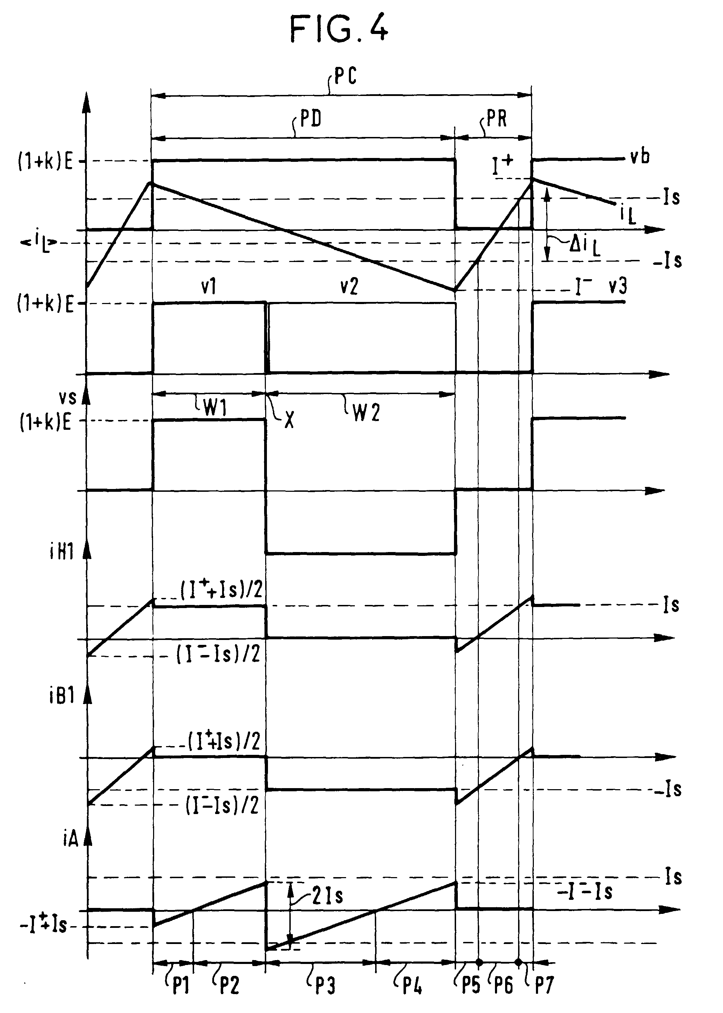

Cet onduleur commande par commutation en mode zéro de tension des courants de charge traversant chacun une borne correspondante N"1 d'une charge inductive S" alternativement dans deux sens opposés. Il comporte pour cela les éléments suivants :
- Un organe de commande R". Cet organe définit des cycles de commutation successifs PC (voir figure 4) suffisamment courts pour que les courants de charge ne varient pas sensiblement au cours d'un cycle. Il définit plus précisément des plages dont une succession répétitive constitue ces cycles. Grâce à des détecteurs tels que RD (voir figure 1), cet organe est sensible aux sens des courants de charge. Il est commandé par des tensions de consigne désignées de manière collective par les lettres VC.
- Une borne constituant une masse G" de cet onduleur. Des tensions seront définies ci-après par rapport à cette masse.
- Des moyens d'alimentation primaire EP" pour fournir une tension électrique unidirectionnelle d'une manière permanente au moins pendant chaque cycle de commutation. Cette tension E est représentée à la figure 1 et sera appelée ci-après "tension permanente". Elle est fournie à l'onduleur sur une borne constituant pour celui-ci une source permanente QE". Les moyens pour la fournir sont typiquement constitués par un pont redresseur non représenté recevant, redressant et filtrant une tension alternative fournie par exemple par un réseau. Ils sont représentés sur les figures comme une source de tension continue positive.
- Une interface LA", CA", A" alimentée en entrée par la source permanente et fournissant une tension d'interface vb sur une borne constituant une sortie d'interface QA".
- Enfin un pont de conversion comportant une pluralité de bras tels que K"1 et K"2 reliant la sortie d'interface à la masse.

L'interface comporte les éléments suivants :
- Une inductance d'interface LA" reliant la source permanente QE" à la sortie d'interface QA". Un courant parcourant cette inductance sera désigné comme étant un courant d'inductance iL.
- Un condensateur d'interface CA". La capacité de ce condensateur est suffisante pour lui conserver une charge sensiblement constante pendant chaque cycle de commutation.
- Enfin un segment d'interface A" connecté en série avec le condensateur d'interface entre la source permanente QE" et la sortie d'interface QA". Lorsque ce segment est conducteur il transmet à la sortie d'interface une tension composite (1+k)E fournie par la source permanente en série avec le condensateur d'interface.

Chaque bras du pont de conversion tel que K"1 correspond à une borne telle que M"1 de la charge S" et au courant de charge traversant cette borne. Il comporte :
- un segment amont H"1 reliant la sortie d'interface QA" à cette borne de charge,
- et un segment aval B"1 reliant cette borne de charge à la masse G".

Un sens direct et un sens inverse sont définis selon la polarité de la source permanente pour chaque courant de charge et pour chaque courant traversant l'inductance d'interface, le segment d'interface, un segment amont ou un segment aval. Le sens direct est celui du courant que la polarité de cette source tend à faire circuler vers la masse à partir de cette source. Une croissance d'un tel courant est une croissance de la valeur algébrique de son intensité mesurée dans ce sens direct. Dans les exemples donnés, la tension permanente est positive.

Chacun des segments précédemment mentionnés peut être bloqué par l'organe de commande R pour les courants de sens direct et il est conducteur pour ces courants lorsqu'il n'est pas bloqué. Il est toujours conducteur pour les courants de sens inverse.

Plus précisément chaque segment d'interface tel que A ou A", et chaque segment amont tel que H ou H"1 ou aval tel que B ou B"1 comporte un interrupteur typiquement semiconducteur tel que TA, TH ou TB (figure 1) Cet interrupteur permet de couper un courant de sens direct parcourant ce segment. Dans le cas des interrupteurs à semiconducteurs connus la commutation en mode zéro de tension exige que chaque interrupteur tel que TH soit muni d'une diode telle que DA, DH ou DB montée en antiparallèle pour conduire un courant de sens inverse. L'onduleur est réalisé comme le hacheur de manière qu'une oscillation de courant fasse conduire cette diode avant cet interrupteur et assure ainsi automatiquement que l'amorçage de ce dernier se fera à tension nulle. L'oscillation est amorcée par le blocage d'un autre interrupteur tel que TA. Chaque segment comporte en outre en parallèle un condensateur d'aide à la commutation tel que CH ou DH représenté seulement à la figure 1.

En revenant à la figure 2, l'organe de commande R" est programmé pour commander le blocage du segment d'interface A", des segments amont tels que H"1 et H"2, et des segments aval tels que B"1 et B"2 selon une séquence de commande définissant deux plages successives au cours de chaque cycle de commutation, ceci quel que soit le nombre des bras du pont de conversion. Conformément aux figures 4 et 6 à 12 chaque telle plage inclue des phases successives (P1...P7) se distinguant les unes des autres par l'existence ou l'absence ou par le sens de courants dans des éléments de l'onduleur.

L'une de ces plages sera appelée ci-après "plage de recharge d'inductance" PR. Au cours de cette plage le segment d'interface tels que A" est bloqué et les deux segments d'au moins un bras du pont de conversion tel que K"1 établissent en série une connection de recharge d'inductance. Cette connection alimente l'inductance d'interface LA" entre la source permanente QE" et la masse G" pour provoquer une croissance du courant d'inductance iL. Un groupe de segments dit ci-après "de limitation de recharge d'inductance" est constitué par un segment de chaque bras pour que son blocage suffise à supprimer cette connection. Ce groupe sera appelé ci-après "groupe de limitation de recharge d'inductance". Dans chaque bras tel que K"1 ou K"2, ce segment, tel que H"1 ou B"2, respectivement, sera appelé "segment de limitation d'impulsion" de ce bras, l'autre segment, tel que B"1 ou H"2, constituant un "segment de modulation d'impulsion" de ce bras. Dans le cas des onduleurs et comme illustré par les figures 2 à 5, l'organe de commande définit ces segments pour chaque cycle et pour chaque bras selon le sens que le courant de charge correspondant à ce bras présente lors de ce cycle.

Plus précisément, en se référant par exemple à la figure 3, dans chaque bras tel que K‴1 et K‴2, correspondant à un courant de charge de sens direct, le segment de limitation d'impulsion est le segment aval, le segment de modulation d'impulsion étant constitué par le segment amont. Au contraire, dans chaque bras tel que K‴3 correspondant à un courant de charge de sens inverse, le segment de limitation d'impulsion est le segment amont, le segment de modulation d'impulsion étant le segment aval.

L'autre plage sera appelée "plage de décharge d'inductance" PD. Elle réalise une décroissance du courant d'inductance. Une extrémité initiale de cette plage est définie par le blocage du groupe de limitation de recharge d'inductance. Ce blocage rend le segment d'interface conducteur pour appliquer au pont de conversion au cours de cette plage la tension composite (1+k)E fournie par la source permanente en série avec le condensateur d'interface. Une extrémité finale de cette plage est définie par un blocage du segment d'interface. Cette plage inclue des phases de décharge P2, P4 et de recharge P1, P3 du condensateur d'interface CA. Le blocage du segment d'interface TA met fin à une phase de décharge P4 de ce condensateur de manière à maintenir la tension composite au-dessus de la tension permanente E dans un sens direct qui est celui de la tension permanente par rapport à la masse.

La séquence de commande est par ailleurs telle que le segment amont tel que H"1 de chaque bras transmette cette tension composite à la borne correspondante telle que M"1 de la charge au cours d'une impulsion de tension W1 correspondant à ce bras et appelée ci-après impulsion de sortie. Une extrémité de la largeur de cette impulsion est constituée par une extrémité de la plage de décharge d'inductance. Dans le cas des onduleurs, ces deux extrémités confondues sont deux extrémités initiales ou finales selon que le courant de charge correspondant à ce bras est de sens direct ou inverse. L'autre extrémité de la largeur de l'impulsion de sortie est constituée par un instant de réglage tel que X1 situé dans cette plage et défini par le blocage du segment de modulation d'impulsion H"1 de ce bras.

L'instant de réglage est commandé dans au moins un bras et de préférence dans tous les bras au cours de chaque cycle de commutation par une tension de consigne devant être appliquée en moyenne dans ce cycle à la borne de la charge correspondant à ce bras. L'onduleur comporte en outre pour cela un organe modulateur, RM" sur la figure 2, recevant les tensions de consigne VC, et pilotant en conséquence l'organe de commande de commutation R".

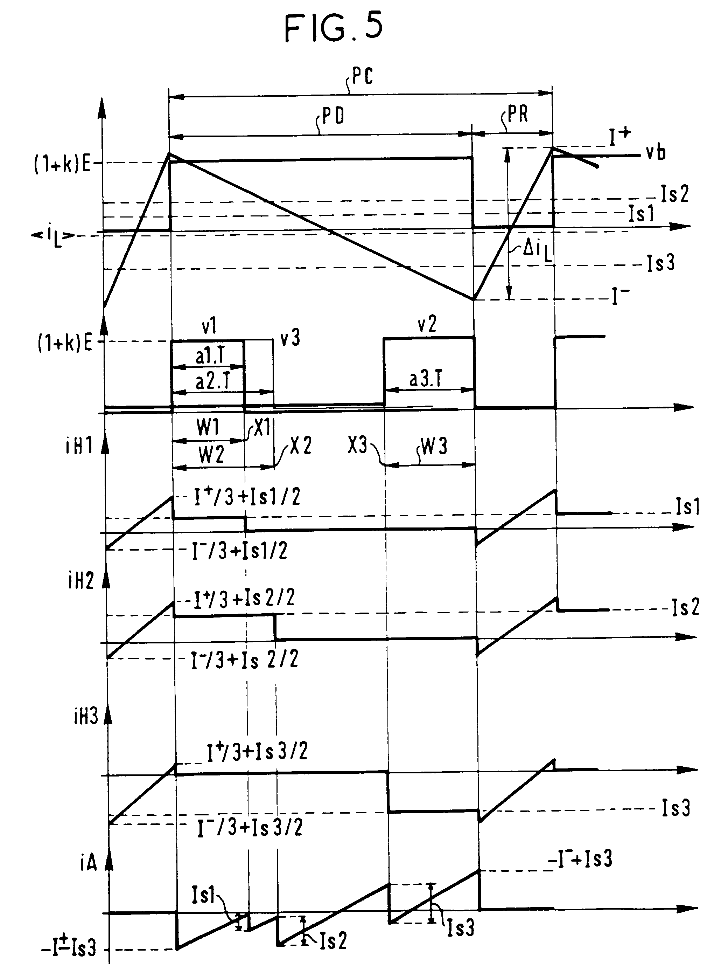

Sur les figures 4 et 5 un cycle de commutation de durée constante est représenté en PC; la plage de recharge d'inductance est représentée en PR et la plage de décharge d'inductance en PD. La durée de cette dernière est αT, α étant un coefficient constant inférieur à 1.

Sur la figure 4 des phases de fonctionnement P1 à P7 sont représentées par référence au bras K"1. La tension variable appliquée entre les deux bornes de la charge S" est représentée en vs. Les impulsions de sortie des bras K"1 et K"2 sont représentées en W1 et W2. Elles occupent deux fractions complémentaires de la plage de décharge d'inductance PD, leur extrémité commune constituant un instant de réglage X commun à ces deux bras. Les intensités des courants traversant les segments A", H"1 et B"1 sont représentées en iA, iH1 et iB1, respectivement.

Pendant la plage de recharge d'inductance PR le segment d'interface A" est bloqué et les quatre segments du pont sont passants. Pendant la plage de décharge d'inductance le segment A" n'est plus bloqué. Pendant l'impulsion W1 les interrupteurs des segments B"1 et H"2 sont bloqués, ceux des segments H"1 et B"2 restant passants. Pendant l'impulsion W2 les quatre interrupteurs du pont sont bloqués.

Des conventions analogues sont utilisées dans la figure 5. Les trois courants de charge sont représentés en Isl, Is2 et Is3, la somme de ces trois courants étant nulle, seul le courant Is3 étant de sens inverse, c'est-à-dire négatif dans l'exemple donné.

Les impulsions de sortie W1 et W2 correspondant à des courants de charge positif Isl et Is2 se terminent par des instants de réglage commandés X1 et X2 tandis que l'impulsion de sortie W3 correspondant au courant de charge négatif débute par un tel instant X3. Les durées de ces trois impulsions sont respectivement al.T, a2.T et a3.T, al, a2 et a3 étant trois nombres commandés par l'organe RM‴ et inférieurs à α.

Il apparaît que, selon la présente invention, la valeur de tension moyenne à appliquer à chaque borne de la charge d'un onduleur est obtenue au cours de chaque cycle de commutation. On va maintenant montrer que ceci s'oppose à ce qui était obtenu avec l'onduleur Divan.

En ce qui concerne tout d'abord la structure de cet onduleur connu commutant en mode zéro de tension il convient de remarquer que, par rapport aux onduleurs selon la présente invention, son interface comporte en outre à titre d'élément essentiel un condensateur qui est désigné par la référence 167 sur la figure 14 du document de brevet US-A 4 864 483 et par la référence CR sur les figures 13 à 21 jointes à la présente description.

Ce condensateur CR a pour fonction d'annuler la tension aux bornes d'un interrupteur tel que TH' pour permettre d'amorcer celui-ci sans pertes. Il est connecté entre la sortie d'interface QA' et la masse G'. Il coopère avec l'inductance d'interface LA' pour constituer un circuit résonant dont certaines oscillations modulent la tension de sortie d'interface. Les commutations des interrupteurs des bras de cet onduleur connu sont commandés seulement aux instants où cette tension intermédiaire est annulée par ces oscillations de sorte que la période propre de ce circuit résonant impose la durée des impulsions de sortie qui alimentent la charge.

C'est pourquoi, dans cet onduleur connu, la durée de ces impulsions de sortie est la même au cours de tous les cycles de commutation. La modulation de la tension d'alimentation moyenne ne peut alors être réalisée qu'au cours d'une période égale à un multiple élevé fixe de la durée du cycle de commutation. Elle est obtenue en faisant varier le nombre des cycles de commutation qui sont effectués au cours de cette période et qui introduisent chacun dans cette période une impulsion de sortie alimentant la charge.

Or il est évidemment souhaitable que la période sur laquelle la tension moyenne souhaitée est obtenue soit aussi courte que possible ceci pour que l'alimentation de la charge suive d'aussi près que possible la variation des besoins de celle-ci, et pour éviter l'utilisation d'éléments de filtrage coûteux.

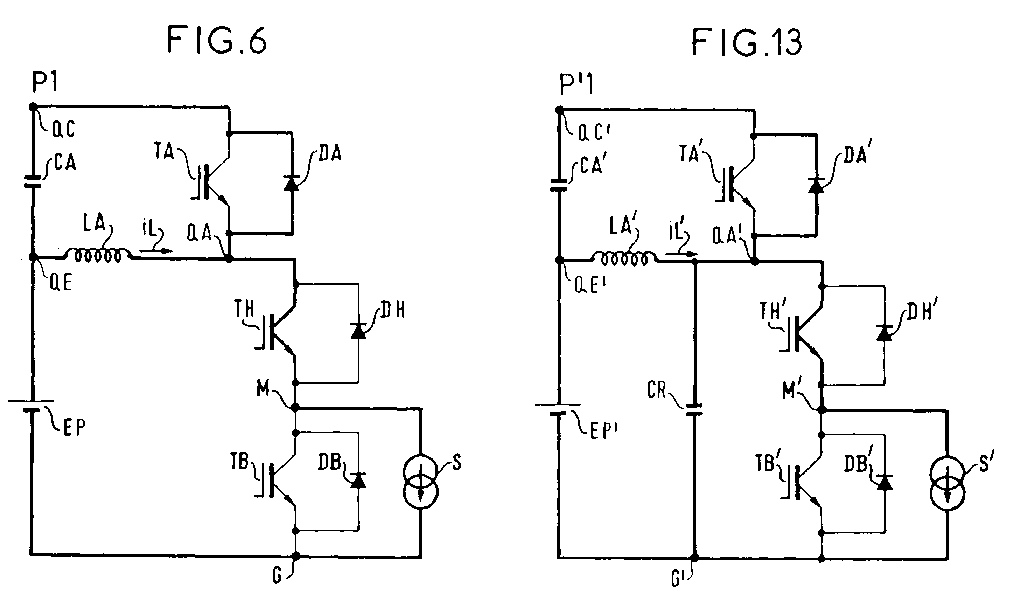

En se référant maintenant aux figures 6 à 21 on va plus particulièrement décrire et comparer les phases successives P1 à P7 du cycle de fonctionnement précédemment mentionné d'un bras d'onduleur selon l'invention et les phases P'1 à P'9 du cycle de fonctionnement correspondant d'un bras de l'onduleur Divan précédemment mentionné. Dans un but de simplification, ces descriptions seront faites à propos de hacheurs dont les ponts de conversion seraient entièrement constitués chacun par un tel bras, étant entendu qu'en fait, des phases analogues peuvent être définies pour chaque bras d'un onduleur, et ceci de manière évidente pour le spécialiste.

Certains condensateurs d'aide à la commutation sont omis sur les figures. Les courants transitoires traversant de tels condensateurs sont également omis.

Au cours des premières phases P1 et P'1 de cycles ainsi définis les diodes d'interface DA et DA' conduisent de même que les interrupteurs amont TH et TH'. Les courants d'inductance iL et iL' sont supérieurs aux courants de charge iS et iS' parcourant les charges S et S'. Ils décroissent. La fin de la phase P1 survient lorsque le courant iL atteint le courant de charge iS.

Le courant s'annule dans la diode DA et l'interrupteur TA s'amorce spontanément.

A la fin de la phase Pl' l'interrupteur TA' s'amorce lui aussi spontanément. On passe ainsi aux deuxièmes phases P2 et P'2.

Une différence essentielle entre les deux cycles de commutation apparaît dès la fin de ces deuxièmes phases. La fin de la phase P2 est provoquée par le blocage de l'interrupteur amont TH à un instant réglable commandé par l'organe de modulation. Celle de la phase P'2 est provoquée par le blocage de l'interrupteur d'interface TA' à un instant prédéterminé choisi dans la durée du cycle pour assurer une valeur convenable à la charge du condensateur CA' et donc à la tension composite. Les phases des deux cycles peuvent ensuite être décrites séparément.

Dans la phase P3, le courant iL continue de décroître. Le courant s'annule dans la diode DA et l'interrupteur TA s'amorce spontanément ce qui initie la phase P4 qui dure jusqu'au blocage de l'interrupteur TA.

Pendant ces deux phases le courant de charge iS circule "en roue libre" à travers la diode DB. Le blocage de TA amorce la diode DH qui conduit donc pendant la phase P5.

Pendant la phase P5 le courant iL croît.

Lorsqu'il devient positif, c'est-à-dire ici de sens direct, la diode DH se bloque et l'interrupteur TH s'amorce spontanément ce qui initie la phase P6.

Lorsque iL atteint iS la diode DB se bloque et l'interrupteur TB s'amorce spontanément ce qui initie la phase P7. Lorsque le courant iL atteint une valeur prédéterminée convenablement choisie au-dessus de iS on bloque l'interrupteur TB ce qui amorce la diode DA et initie la phase P1 du cycle de commutation suivant.

Les phases P1 et P2 forment l'impulsion de sortie au début d'un arc de décharge d'inductance. Ce dernier se poursuit par les phases P3 et P4. Les phases P5, P6 et P7 constituent l'arc de recharge d'inductance. Dans le cas où le courant de charge est de sens inverse, l'impulsion de sortie est à la fin de de l'arc de décharge d'inductance.

Dans l'onduleur Divan le blocage de l'interrupteur TA' à la fin de la phase P'2 initie une oscillation du circuit constitué par l'inductance LA' et le condensateur CR. Lorsque la tension V'2 s'annule en raison de cette oscillation on bloque l'interrupteur TH' ce qui termine la phase P'3 et amorce la diode DB' pour faire circuler le courant de charge iS' en roue libre pendant la phase P'4.

Lorsque la tension intermédiaire V'2 atteint la tension auxiliaire V'3 la diode DA' s'amorce. Le courant dans cette diode décroît au cours de la phase P'5 jusqu'à son annulation et à l'amorçage spontané de l'interrupteur TA' au début de la phase P'6.

Lorsque V'2 redevient égal à V'3 on bloque l'interrupteur TA' ce qui réinitie une oscillation du circuit LA'-CR. Cette oscillation partielle constitue la phase P'7 qui se termine lorsque V'2 s'annule avec un réamorçage de TH'. La circulation du courant de charge continue partiellement en roue libre à travers la diode DB' au cours de la phase P'8 jusqu'à un blocage de cette diode. Lors de la phase P'9 la charge du condensateur CR croît jusqu'à ce que V'2 atteigne V'3 ce qui amorce la diode DA' et initie la phase P'1 du cycle suivant.

## Revendications

1. Procédé de commande pour courant électrique, ce procédé comportant la réalisation d'une succession de cycles de commutation en mode zéro de tension, chacun de ces cycles appliquant une impulsion de tension (W1) à chacune de plusieurs bornes (M"1, M"2) d'une charge inductive (S"), ce procédé étant caractérisé par le fait que le sens du courant passant par cette borne est détecté, une modulation de la largeur de cette impulsion de tension étant réalisée par réglage dans le temps de l'extrémité finale ou de l'extrémité initiale de cette impulsion selon le sens de courant ainsi détecté.

2. Procédé selon la revendication 1 pour commander plusieurs courants de charge traversant respectivement plusieurs bornes d'une charge inductive (S"), chacun de ces courants circulant alternativement dans deux sens opposés, procédé selon lequel on définit des cycles de commutation successifs suffisamment courts pour que ces courants de charge ne varient pas sensiblement au cours d'un cycle et selon lequel, au cours de chaque tel cycle, on alimente un pont de conversion statique (K"1, K"2) à partir d'une source permanente (QE") par l'intermédiaire d'une interface incluant une inductance d'interface (LA") en parallèle avec une association en série d'un condensateur d'interface (CA") et d'un segment d'interface (A"), ce pont de conversion incluant pour chaque dite borne (M"1) de la charge un bras (K"1) correspondant à cette borne et au courant de charge (is) traversant cette borne, ce bras comportant :
- un segment amont (H"1) connecté entre une sortie (QA") de cette interface et cette borne,
- et un segment aval (B"1) connecté entre cette borne et une masse (G") commune à la source permanente et au pont de conversion,
un sens direct et un sens inverse étant définis selon la polarité de la source permanente pour chaque courant de charge et pour chaque courant traversant l'inductance d'interface, le segment d'interface, un segment amont ou un segment aval, le sens direct étant celui du courant que la polarité de cette source tend à faire circuler vers la masse à partir de cette source, une valeur algébrique du courant étant mesurée dans ce sens direct,
chaque dit segment pouvant être bloqué sur commande pour les courants de sens direct et étant conducteur pour ces courants lorsqu'il n'est pas bloqué, ce segment étant toujours conducteur pour les courants de sens inverse,
certains au moins des cycles de commutation comportant chacun deux plages s'étendant et se succédant dans le temps, ces deux plages étant :
- une plage de recharge d'inductance (PR) au cours de laquelle le segment d'interface (A") est bloqué et les deux segments d'au moins un bras du pont de conversion (K"1) établissent en série une connexion de recharge d'inductance connectant l'inductance d'interface (LA") entre la source permanente (QE") et la masse (G") pour provoquer une croissance en valeur algébrique du courant traversant cette inductance, ce courant constituant un courant d'inductance (iL), un groupe de segments de ce pont étant tel que son blocage suffise à supprimer cette connexion, ce groupe constituant un groupe de limitation de recharge d'inductance et comportant un segment de chaque bras, ce segment constituant un segment de limitation d'impulsion (H"1) de ce bras (K"1), l'autre segment de ce bras constituant un segment de modulation d'impulsion (B"1) de ce bras, les segments de limitation et de modulation d'impulsion de chaque bras (K"1) étant respectivement ses segments (B"1 et H"1) aval et amont dans les cycles où le courant de charge correspondant à ce bras est de sens direct, les segments de limitation et de modulation d'impulsion de chaque bras (K"2) étant respectivement ses segments amont (H"2) et aval (B"2) dans les cycles où le courant de charge correspondant à ce bras est de sens inverse,
- et une plage de décharge d'inductance (PD), une extrémité initiale de cette plage étant définie par le blocage du groupe de limitation de recharge d'inductance, le segment d'interface (A") étant rendu conducteur à partir de cette extrémité initiale pour appliquer une tension composite (1+k)E au pont de conversion tout en provoquant une décroissance en valeur algébrique du courant d'inductance, cette tension composite étant fournie par la source permanente en série avec le condensateur d'interface, une extrémité finale de cette plage étant définie par un blocage du segment d'interface,
- le segment amont d'au moins un bras (K"1) transmettant cette tension composite à la borne correspondante de la charge au cours d'une dite impulsion de tension constituant une impulsion de sortie (W1) correspondant à ce bras et présentant une largeur, une extrémité de cette largeur étant située à une extrémité de la plage de décharge d'inductance, l'autre extrémité de cette largeur étant située dans cette plage et définie par un blocage du segment de modulation d'impulsion de ce bras et constituant un instant de réglage (R1) correspondant à ce bras et définissant cette largeur, le choix des segments de limitation et de modulation d'impulsion étant commandé dans chaque cycle de commutation par le sens que les courants de charge présentent au cours de ce cycle, l'instant de réglage étant commandé dans au moins un bras au cours de chaque cycle de commutation par une tension de consigne à appliquer lors de ce cycle à la borne de la charge correspondant à ce bras, grâce à quoi ladite tension moyenne appliquée à cette borne au cours d'un groupe de cycles successifs suit les variations de cette tension de consigne grâce à une modulation de la largeur des impulsions de sortie qui sont appliquées à cette borne au cours de ces cycles.

3. Onduleur pour commander par commutation en mode zéro de tension des courants de charge (is) traversant des bornes correspondantes (M"1) d'une charge inductive (S") alternativement dans deux sens opposés, cet onduleur comportant :
- un organe de commande (R") définissant des cycles de commutation successifs (PC) suffisamment courts pour que les courants de charge ne varient pas sensiblement au cours d'un cycle, cet organe définissant en outre des plages successives dans chacun de ces cycles, cet organe étant sensible au sens de chaque courant de charge et étant commandé par des tensions de consigne (VC) à appliquer respectivement aux bornes de la charge,
- une borne constituant une masse (G") de cet onduleur, des tensions étant définies par rapport à cette masse,
- des moyens d'alimentation primaire (EP") pour fournir une tension électrique unidirectionnelle d'une manière permanente au moins pendant chaque cycle de commutation, cette tension constituant une tension permanente (E) et étant fournie sur une borne constituant une source permanente (QE"),
- une interface (LA", CA", A") alimentée en entrée par la source permanente et fournissant une tension d'interface (vb) sur une borne constituant une sortie d'interface (QA"),
- et un pont de conversion comportant une pluralité de bras (K"1, K"2) reliant la sortie d'interface à la masse,
l'interface comportant :
- une inductance d'interface ( LA") reliant la source permanente (QE") à la sortie d'interface (QA") , un courant parcourant cette inductance constituant un courant d'inductance (iL),
- un condensateur d'interface (CA"), la capacité de ce condensateur étant suffisante pour lui conserver une charge sensiblement constante pendant chaque cycle de commutation,
- et un segment d'interface à conduction commandée (A") connecté en série avec le condensateur d'interface entre la source permanente (QE") et la sortie d'interface (QA") de sorte que lorsque ce segment est conducteur il transmet à la sortie d'interface une tension composite ((1+k)E) fournie par la source permanente en série avec le condensateur d'interface,
chaque bras du pont de conversion (K"1) correspondant à une borne (M"1) de la charge (S") et au courant de charge traversant cette borne, ce bras comportant :
- un segment amont (H"1) reliant la sortie d'interface (QA") à cette borne de charge,
- et un segment aval (B"1) reliant cette borne de charge à la masse (G"),
un sens direct et un sens inverse étant définis selon la polarité de la source permanente pour chaque courant de charge et pour chaque courant traversant l'inductance d'interface, le segment d'interface, un segment amont ou un segment aval, le sens direct étant celui du courant que la polarité de cette source tend à faire circuler vers la masse à partir de cette source, une croissance ou une décroissance d'un tel courant étant une croissance d'une valeur algébrique de son intensité mesurée dans ce sens direct,
chaque dit segment pouvant être bloqué par l'organe de commande (R") pour les courants de sens direct et étant conducteur pour ces courants lorsqu'il n'est pas bloqué, ce segment étant toujours conducteur pour les courants de sens inverse, cet organe étant programmé pour commander le blocage des segments d'interface (A"), des segments amont (H"1), et des segments aval (B"1) selon une séquence de commande définissant deux plages successives au cours de chaque cycle de commutation, chaque telle plage incluant des phases successives (P1...P7) se distinguant les unes des autres par l'existence ou l'absence ou par le sens de courants dans des éléments de l'onduleur,
ces plages étant :
- une plage de recharge d'inductance (PR) au cours de laquelle le segment d'interface (A") est bloqué et les deux segments d'au moins un bras du pont de conversion (K"1) établissent en série une connexion de recharge d'inductance alimentant l'inductance d'interface (LA") entre la source permanente (QE") et la masse (G") pour provoquer une croissance du courant d'inductance (iL), un groupe de limitation de recharge d'inductance étant constitué par un segment de chaque bras pour que son blocage suffise à supprimer cette connexion, ce groupe constituant un groupe de limitation de recharge d'inductance, ce segment constituant dans chaque bras, un segment de limitation d'impulsion (H"1) de ce bras, l'autre segment constituant un segment de modulation d'impulsion (B"1) de ce bras, ces segments de limitation et de modulation d'impulsions étant définis dans chaque bras et pour chaque cycle par l'organe de commande selon le sens que le courant de charge correspondant à ce bras présente dans ce cycle,
- et une plage de décharge d'inductance (PD) réalisant une décroissance du courant d'inductance, une extrémité initiale de cette plage étant définie par le blocage du groupe de limitation de recharge d'inductance, le segment d'interface étant rendu conducteur à partir de cette extrémité initiale pour appliquer au pont de conversion au cours de cette plage une tension composite ((1+k)E) fournie par la source permanente en série avec le condensateur d'interface, une extrémité finale de cette plage étant définie par un blocage du segment d'interface, cette plage incluant des phases de décharge (P2, P4) et de recharge (P1, P3) du condensateur d'interface (CA), le blocage du segment d'interface (TA) mettant fin à une phase de décharge (P4) de ce condensateur de manière à maintenir la tension composite au-dessus de la tension permanente (E) dans un sens direct qui est celui de la tension permanente par rapport à la masse, la séquence de commande étant telle que le segment amont (H"1) de chaque bras transmette cette tension composite à la borne correspondante (M"1) de la charge au cours d'une impulsion de sortie (W1) correspondant à ce bras, une extrémité de la largeur de cette impulsion étant constituée par une extrémité de la plage de décharge d'inductance, l'autre extrémité de la largeur de cette impulsion étant située dans cette plage et définie par un blocage du segment de modulation d'impulsion (H1") de ce bras, ce blocage étant commandé par l'organe de commande à un instant de réglage (X1) défini par cet organe selon la valeur de la tension de consigne correspondant à ce bras.

4. Onduleur selon la revendication 3, cet onduleur étant caractérisé par le fait que, dans chaque bras commandé tel que (K‴1, K‴2), correspondant à un courant de charge de sens direct, le segment de limitation d'impulsion défini par l'organe de commande (R"') est le segment aval (B‴1, B‴2), le segment de modulation d'impulsion étant constitué par le segment amont (H‴1, H‴2), tandis que, dans chaque bras (K"'3) correspondant à un courant de charge de sens inverse, le segment de limitation d'impulsion est le segment amont (H‴3), le segment de modulation d'impulsion étant le segment aval (B‴3).

5. Onduleur selon la revendication 4, caractérisé par le fait que le pont de conversion comporte deux bras (K"1, K"2) pour constituer un onduleur monophasé.

6. Onduleur selon la revendication 4, caractérisé par le fait que le pont de conversion comporte trois bras (K‴1, K‴2, K‴3) pour constituer un onduleur triphasé.
